# EUROPÄISCHE PATENTSCHRIFT

(11) **EP 1 311 584 B1**
(45) Veröffentlichungstag und Bekanntmachung des Hinweises auf die Patenterteilung: **07.03.2007**
(21) Anmeldenummer: 01974167.7
(22) Anmeldetag: 10.08.2001
(51) Int. Cl.: C08G 69/26, C08G 69/40, C08G 69/02, C09J 177/06

(54) **FORMTEILE AUS DIMERFETTSÄUREFREIEN POLYAMIDEN**
MOULDED PARTS MADE OF POLYAMIDES WHICH ARE FREE OF DIMERIC ACIDS
PIECES PROFILEES EN POLYAMIDES EXEMPTS D'ACIDES GRAS DIMERES

(30) Priorität: 19.08.2000 DE 10040762
(43) Veröffentlichungstag der Anmeldung: 21.05.2003
(73) Patentinhaber: Henkel Kommanditgesellschaft auf Aktien, 40589 Düsseldorf (DE)
(72) Erfinder: BECKER, Bettina, 40789 Monheim (DE); ROSSINI, Angela, I-20162 Milano (IT); MÖLLER, Thomas, 40593 Düsseldorf (DE); SCHUBERT, Georg, 41065 Mönchengladbach (DE); HUVER, Thomas, 40625 Düsseldorf (DE)
(86) Internationale Anmeldenummer: PCT/EP2001/009283
(87) Internationale Veröffentlichungsnummer: WO 2002/016472

(56) Entgegenhaltungen:
- EP-A- 0 536 681
- EP-A- 1 013 694
- FR-A- 2 386 573
- US-A- 5 728 800

## Beschreibung

Die Erfindung betrifft die Verwendung von Schmelzklebstoffen zur Herstellung von Formteilen sowie ein Verfahren zur Herstellung derartiger Formteile.

In der EP 0 193 746 wird ein Verfahren zur Herstellung von Verklebungen und Beschichtungen aus der Schmelze thermoplastischer Polyamide beschrieben, wobei man als Polyamide Blockcopolymere einsetzt, die erhalten worden sind durch die Umsetzung von
a) im wesentlichen linear aufgebauten, mit Carbonsäurefunktionen und/oder Amingruppen terminierten Polyamiden auf Basis von dimerisierten Fettsäuren sowie aliphatischen bzw. cycloaliphatischen Diaminen mit
b) im wesentlichen linearen Isocyanatendgruppen aufweisenden, aliphatischen Polyethern und/oder deren Reaktionsprodukten mit 2,3-Epoxypropanol,
wobei die Blockpolymeren keine freien Isocyanat- oder Epoxidgruppen enthalten.

Diese Blockcopolymeren können mit den handelsüblichen Schmelzkleberpistolen zum Verkleben von verschiedenen Werkstoffen verwendet werden. Die Verklebungen weisen eine gute Zugscherfestigkeit und gute kälte Flexibilität auf, die Herstellung von Formteilen oder Formkörpern aus diesen Blockcopolymeren werden in dieser Schrift nicht offenbart.

Formteile aus thermoplastischen Poly(amid-urethan)-Blockcopolymeren werden in der WO 95/00364 beschrieben. In dieser Schrift werden Kabelbäume mit Halteelementen beschrieben, die mindestens die äußere Umfläche des Leitungsbündels an den Fixpunkten umfassende Spritzguß-Formkörper sind. Die Formkörper können z. B. als Durch- oder Einführungstülle ausgebildet sein. Der verwendete Schmelzklebstoff sollte vorzugsweise vernetzen, insbesondere mit Luftfeuchtigkeit. Außerdem sollte er gummielastisch, flammwidrig und teilkristallin sein. Die Formkörper werden hergestellt, indem
a) die gebündelten Leitungen mit den zu fixierenden Bereichen in eine Spritzgußform gelegt werden,
b) die Form geschlossen,
c) die aufgeschmolzene Formmasse bis zu einem Druck von 0 bis 30 bar, insbesondere von 5 bis 30 bar, in die Form eingespritzt und zweckmäßigerweise mit dem gleichen Druck nachgedrückt,
d) bis zur Verfestigung durch Abkühlen gewartet,
e) die Form geöffnet und
f) entformt wird.

In der technischen Information "Macromelt - Moulding" der Firma Henkel KGaA vom März 1994 werden Formteile aus dem Schmelzklebstoff "Macromelt" beschrieben. Das dort beschriebene Verfahren ist geeignet zum Umspritzen von Einlegeteilen aus Kunststoff. Aufgrund der guten Haftung von Macromelt werden hohe Dichtheiten und Festigkeiten mit dem umspritzten Formteil erzielt. Wegen der relativ niedrigen Viskosität des Schmelzklebstoffes Macromelt kann er mit nur geringem Druck in die Spritzform gepumpt werden, wo selbst filigrane Bauteile schonend umspült und somit abgedichtet und geschützt werden. Macromelt hat eine sehr gute Haftung auf polaren (z. B. PVC, PA 6.6, PUR) und unpolaren (z. B. PP) Kunststoffoberflächen. Zur Herstellung der Formteile wird das Macromelt ausschließlich durch Wärmezufuhr in seinen niedrigviskosen Schmelzezustand überführt. Die Schmelze wird in ein kaltes Formteilwerkzeug gepumpt, wo ihr die Wärme wieder entzogen wird. Dieser Vorgang dauert - in Abhängigkeit von der Masse (der Wärmemenge) - im Normalfall nur wenige Sekunden. Danach kann das fertige Formteil aus dem Werkzeug genommen werden. Die Verarbeitung findet auf besonderen Verarbeitungsmaschinen statt, die den Materialfluß von der Aufschmelzung bis zum Werkzeug automatisch und somit prozesssicher steuern. Genaue Angaben, woraus der thermoplastische Formteilwerkstoff auf Hotmelt-Basis ist, sind der technischen Information nicht zu entnehmen. Im Handel werden jedoch Produkte auf der Basis von Polyamiden angeboten.

Die WO 92/22104 beschreibt eine Steckverbindung für elektrisch leitende Kabel, insbesondere für Koaxial-Kabel.

Sie ist durch die Verwendung eines Schmelzklebstoffs mit einer Schmelzviskosität von mehr als 8 000 mPa·s bei 200 °C charakterisiert. Dieser dient gleichzeitig zum Verbinden, Dichten, Füllen und Isolieren. So soll im vorliegenden Fall nicht nur das Kabel mit dem Steckverbinder fest zusammengehalten werden, sondern darüber hinaus auch der Zugang von insbesondere Feuchtigkeit und Staub zwischen Kabel und Außenhülse sowie zwischen Kontakthülse und dem isolierenden Schmelzklebstoff verhindert werden. Die Hauptbestandteile des Schmelzklebstoffs sind ein Polyamid auf der Basis von dimerisierter Fettsäure, aliphatischen Aminen und modifizierenden Zusätzen sowie ein Copolyethylen und Hilfsstoffe. Es werden Stecker erhalten, die hohen elektrischen, thermischen und sonstigen Ansprüchen genügen.

Auch die DE 38 42 294 betrifft einen Anschlussstecker für ein koaxiales Hochfrequenzkabel. Dort wird als Kunststoff-Füllung ein Polyurethan-Kunststoff verwendet.

In der US 5,250,607 wird ein feuchtigkeitshärtendes extrudierbares thermoplastisches Dichtungsmittel beschrieben, das im wesentlichen aus 2 Komponenten besteht, nämlich
a) einem Prepolymeren mit etwa 2 Isocyanatendgruppen pro Molekül, welche miteinander in Gegenwart der umgebenden Feuchtigkeit reagieren und
b) einem Weich-PVC.
Aufgrund ihrer elastischen Eigenschaften eignen sie sich unter anderem als dichtende Einbettung bei elektrischen Verbindungsstücken. Außerdem können aus dieser Polymermischung auch Folien, Rohre, Deckeldichtungen für Fässer oder Bänder hergestellt werden.

Die WO 96/20252 beschreibt Formmassen auf der Basis von feuchtigkeitshärtenden PU - Schmelzklebstoffen und deren Verwendung zur Herstellung von Formteilen. Dabei sollen die PU - Schmelzklebstoffe eine Schmelzviskosität von weniger als 100 Pa.s bei der Verarbeitungstemperatur von 70 bis 190 °C haben. Zur Herstellung der Formteile wird die Formmasse auf Temperaturen von 70 bis 200 °C aufgeschmolzen, die Schmelze mit einem Überdruck von 1 bis 50 bar in geschlossene Formen gespritzt, die abgekühlten Formteile nach kurzer Zeit entformt und dann mit Luftfeuchtigkeit ausgehärtet.

Diese Schrift gibt als wirtschaftliche und technische Vorteile einen deutlich geringeren Verarbeitungsdruck, Maschinenaufwand und Werkzeugaufwand sowie gute Haftung der Formmassen auf die diversen Substraten an. Die Formteile sollen temperaturbeständig sein und sich insbesondere zur Herstellung von elektrischen Bauteilen eignen.
Die WO 00/25264 beschreibt die Verwendung von thermoplastischen Schmelzklebstoffen zur Herstellung von Komponentenschichten in Smart Cards oder zur Herstellung von elektronischen Transpondem mit Hilfe eines Niederdruck
- Spritzgußverfahrens bei Drücken zwischen 1 und 50 bar. Gemäß der Lehre dieser Schrift eignen sich für dieses Verfahren Schmelzklebstoffe auf der Basis von Polyurethanen, Polyestern, ataktischem Polypropylen, Ethylen-Vinylacetat (EVA)- Copolymeren, niedermolekularen Ethylen-Copolymeren oder Polyamiden, wobei als Polyamide speziell die Polyaminoamide auf der Basis dimerisierter Fettsäuren vorgeschlagen werden.

Für das Abdichten von elektronischen Bauteilen, sowie zur Herstellung von Formteilen werden also gemäß Stand der Technik bereits vielfach Schmelzklebstoffe eingesetzt, wobei die bekannten Polyamid - Schmelzklebstoffe auf der Basis von Dimerfettsäure zwar eine Reihe von Vorzügen, wie zum Beispiel geringe Viskosität, günstiges Fließverhalten in Niederdruck - Verfahren, gute Haftungseigenschaften und Flexibilität aufweisen, es besteht jedoch Bedarf, Formmassen bereit zu stellen, die eine bessere mechanische Festigkeit, Härte, Abriebfestigkeit, chemische Beständigkeit und Wärmestandfestigkeit aufweisen.

Aufgabe der vorliegenden Erfindung war es, Zusammensetzungen zur Verwendung als Formmassen bereit zu stellen, die sich für das Niederdruck - Spritzgußverfahren eignen und die insbesondere bessere Festigkeit, Härte, chemische Beständigkeit und Wärmestandfestigkeit aufweisen.
Die erfindungsgemäße Lösung der Aufgabe ist den Ansprüchen zu entnehmen. Sie besteht im Wesentlichen in der Bereitstellung von Polyamiden auf der Basis von Reaktionsprodukten aus C₄ bis C₁₈ - Dicarbonsäuren und Diaminen, die keine Dimerfettsäure - Bausteine enthalten und die als Formmassen zur Herstellung von Formteilen im Niederdruck - Spritzgußverfahren geeignet sind.

Ein weiterer Gegenstand der vorliegenden Erfindung ist ein Verfahren zur Herstellung von Formteilen für die Elektro- oder Elektronik- Industrie, bei dem die Formmassen auf Basis der Dimerfettsäure- freien Polyamide bei Temperaturen von 70°C bis 230°C aufgeschmolzen werden, diese Schmelze in Niederdruckverfahren mit Injektionsdrücken von 0,5 bis 100 bar, vorzugsweise 1,0 bis 50 bar in die geschlossenen Gießformen oder Hohlkörper eingespritzt werden und die abgekühlten Formteile nach kurzer Zeit aus den Gießformen entfernt werden.
Die erfindungsgemäß zu verwendenden Polyamide werden herstellt aus
- 80 bis 100 mol %, vorzugsweise 100 mol %, einer oder mehrer C₄-C₁₈-Dicarbonsäure(n)
- 10 bis 100 mol %, vorzugsweise 30 bis 80 mol %, mindestens eines aliphatischen Diamines
- 10 bis 80 mol %, vorzugsweise 45 bis 60 mol %, eines oder mehrer cycloaliphatischer Diamine
- 0 bis 80 mol %, vorzugsweise 10 bis 50 mol % Polyetherdiaminen,
wobei die Summe der eingesetzten Diamine 100 mol % ergibt, so daß Dicarbonsäure-komponente und Diaminkomponente in etwa equivalenten molaren Mengenanteilen vorliegen.

Dabei werden die Dicarbonsäuren vorzugsweise in etwa 10 % stöchiometrischen Überschuß gegenüber den Diaminen eingesetzt, so daß Carboxyl - terminierte Polyamide entstehen. Das Molekulargewicht der erfindungsgemäß zu verwendenden Polyamide beträgt (berechnet aus der Säurezahl) (10 000 bis 50 000, vorzugsweise 15 000 bis 30 000, besonders bevorzugt zwischen 15 000 und 20 000. Daraus resultiert eine Viskosität der erfindungsgemäßen zu verwendenden Polyamide zwischen 100 und 50 000 mPa.s, vorzugsweise zwischen 2 000 und 30 000 mPa.s gemessen bei 200 °C gemäß ASTM D 3236.

Beispiele für Dicarbonsäuren zur Herstellung der erfindungsgemäßen Polyamide sind insbesondere Bemsteinsäure, Glutarsäure, Adipinsäure, Pimelinsäure, Korksäure (Suberinsäure), Azelainsäure, Sebacinsäure, Undecandisäure oder Dodecandisäure oder deren Mischungen.
Die Diamin-Komponente besteht im wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten,
wobei die aliphatische Kette linear oder leicht verzweigt sein kann. Konkrete Beispiele sind Ethylendiamin, Diethylentriamin, Dipropylentriamin, 1,4-Diaminobutan, 1,3-Pentandiamin, Methylpentandiamin, Hexamethylendiamin, Trimethyl-hexamethylendiamin, 2-(2-aminomethoxy)ethanol, 2-Methylpentamethylendiamin, C₁₁-Neopentandiamin, Diaminodipropylmethylamin, 1,12-Diaminododecan. Die besonders bevorzugten aliphatischen Diamine sind C₄-C₁₂-Diamine mit einer geraden Anzahl an Kohlenstoffatomen.
Die Amino-Komponente kann weiterhin cyclische Diamine oder heterocyclische Diamine enthalten wie zum Beispiel 1,4-Cyclohexandiamin, 4,4'-Diaminodicyclohexylmethan, Piperazin, Cyclohexan-bis-(methylamin), Isophorondiamin, Dimethylpiperazin, Dipiperidylpropan, Norboman-diamin oder m-Xylylendiamin.
Wenn das Polyaminoamid eine höhere Flexibilität aufweisen soll, können zusätzlich noch Polyoxyalkylendiamine wie zum Beispiel Polyoxyethylendiamine, Polyoxypropylendiamine oder Bis-(di-aminopropyl)-polytetrahydrofuran mit verwendet werden. Dabei sind die Polyoxyalkylendiamine, auch als "Jeffamine" (Handelsname der Firma Huntsman) bekannt, besonders bevorzugt. Das Molekulargewicht der eingesetzten Jeffamine liegt zwischen 150 und 4000 vorzugsweise zwischen 200 und 2000.

Weiterhin können Aminocarbonsäuren oder deren cyclische Derivate mit verwendet werden. Beispielhaft erwähnt sein hier 6-Aminohexansäure, 11-Aminoundecansäure, Laurolactam, ε-Caprolactam.

Weiterhin können die erfindungsgemäßen Zusammensetzungen weitere, für Schmelzklebstoffe übliche Zusätze, enthalten, beispielhaft erwähnt seien hier klebrig machende Harze, wie z.B. Abietinsäure, Abietinsäureester, Terpenharze, Terpenphenolharze oder Kohlenwasserstoffharze. Weiterhin können unter Umständen in untergeordneten Mengen Füllstoffe eingesetzt werden, z.B. Silikate, Talk, Calciumcarbonate, Tone, Ruß oder Farbpasten bzw. Pigmente.
Je nach den konkreten Anwendungen kann es angebracht sein, den Schmelzklebstoff gegen Abbau zu stabilisieren. Als Antioxidantien eignen sich dabei insbesondere die Antioxidantien vom Typ der sterisch gehinderten Phenole oder der aromatischen Aminderivate in Mengen bis zu 1,5 Gew.% bezogen auf das Bindemittel. Beispielhaft erwähnt seien hier die Produkte, die unter dem Handelsnamen Irganox 1010, 1076, 3114 oder 1425 von der Firma Ciba Specialty Chemicals sowie unter dem Handelsnamen Topanol O der Firma ICI oder Goodrite 3114 von der Firma B.F. Goodrich im Handel erhältlich sind.
Vorzugsweise enthalten die erfindungsgemäßen Schmelzklebstoffe keinerlei Lösungsmittel. Darunter werden inerte, organische Verbindungen mit einem Siedepunkt bis zu 200°C bei Normaldruck verstanden.

Die zu verarbeitenden Schmelzklebstoffe können in verschiedenen Formen zur Verarbeitung vorliegen, z. B. als Tabletten, als Granulat oder als Stangen oder als kompakter Block eingegossen in ein Gebinde. Vorzugsweise liegen sie in Form von Granulat vor.

Aus diesen Formmassen werden unter Einwirkung von mechanischen Kräften innerhalb eines bestimmten Temperaturbereiches Formteile durch Formung hergestellt, prinzipiell kann dies durch alle bekannten Verarbeitungsverfahren geschehen z.B. durch Extrusion, Gießen, Spritzgießen, Pressen, Spritzpressen, Strangpressen usw. Erfindungsgemäß wird die Formmasse jedoch durch Niederdruck-Spritzgießen zu Formteilen verarbeitet. Dieser Spritzguβ-Zyklus umfasst folgende Einzelschritte:
a) Die Form wird geschossen, nachdem eventuell zu verbindende Teile eingelegt wurden.
b) Die aufgeschmolzene Formmasse wird bis zu einem Druck zwischen 0,5 bis 100 bar, vorzugsweise von 1,0 bis 50 bar in die Form eingespritzt und gegebenenfalls nachgedrückt.
c) Es wird gewartet, bis sich die Formmasse durch Abkühlung verfestigt hat.
d) Die Form wird geöffnet.
e) Die Spritzguß-Formteile werden der Form entnommen.

Ganz besonders eignen sich die Schmelzklebstoffe zum gleichzeitigen Kleben, Dichten und Füllen, wie sie z. B. für Steckverbindungen für elektrisch leitende Kabel, insbesondere für Koaxial-Kabel verlangt werden. Solche Steckverbindungen können im wesentlichen folgendermaßen hergestellt werden: Das abisolierte Kabel wird mit der Kontakthülse bzw. dem Kontaktstift verbunden (z. B. durch Löten oder Quetschen) und in die Außenhülse geschoben. Beides wird auf ein Gegenstück gesteckt, also auf eine Stecker-Form, wenn eine Hülse hergestellt werden soll. Der entstehende Hohlraum wird mit der Schmelze des Schmelzklebstoffs unter Druck vollständig oder definiert teilweise ausgefüllt. Sie kann z. B. durch eine Ringdüse oder eine Injektionsdüse an den Hohlraum gespritzt werden (Spritzguß). Es ist vorteilhaft, wenn sich die Düse anfangs möglichst weit in der Außenhülse befindet und mit zunehmender Füllung nach außen gedrückt wird.

Insbesondere ist es möglich, einen Schrumpfschlauch oder einen Schrumpfartikel über die Steckverbindung und das Kabel zu ziehen und ihn horizontal durch Erwärmung auf mehr als 150 °C schrumpfen zu lassen. Die Steckverbindungen sind bis zu einem Überdruck von mindestens 0,3 atm dicht. Die Steckerhülsen und Steckerstifte befinden sich, sowohl bei der Herstellung als auch bei normaler Benutzung auch ohne zusätzliche Fixier-Hilfsmittel genau an der gewünschten Stelle, selbst bei großen Steckverbindungen. Wenn allerdings so wenig Schmelzklebstoff verwendet wird, daß die Steckerhülse bzw. die -stifte weit herausstehen, dann kann eine zusätzliche Fixierscheibe an ihrem Anfang nützlich sein. Trotz der hohen Viskosität gibt es keine schädlichen Hohlräume.

In gleicher Weise eignen sich die erfindungsgemäßen zu verwendenden Schmelzklebstoffe zum Abdichten und Vergießen von Schaltern, Sensoren, Transpondern, anderen elektrischen und elektronischen Modulen, Leiterplatten oder auch für die Einkapselung der elektrischen oder elektronischen Komponenten wie z.B. elektronischen Schaltkreisen (Chip) wie sie bei modernen Ausweis-, Kredit-, Bank- und Telefonkarten, sogenannten (Smart Cards), eingesetzt werden. Weitere Anwendungsfelder sind z.B. das Eingießen und Verkapseln von elektronischen und elektrischen Komponenten im Automobilbereich wie Antennen und deren Verstärker. Es ist zwar schon vorgeschlagen worden, Schmelzklebstoffe für das Niederdruck - Spritzgußverfahren einzusetzen, insbesondere wurden hierfür bisher Polyamide auf der Basis von Dimerfettsäuren vorgeschlagen, die eine geringe Schmelzviskosität aufweisen und dadurch ein günstiges Fließverhalten im Niederdruck - Verfahren haben. Sie zeichnen sich auch durch gute Haftungseigenschaften und gute Flexibilität aus.
Gegenüber diesen gemäß bekanntem Stand der Technik zu verwendenden Schmelzklebstoffen weisen die erfindungsgemäß zu verwendenden Schmelzklebstoffe noch zusätzlich die folgenden vorteilhaften Eigenschaften auf :
- die mechanische Festigkeit, wie Zugfestigkeit ist sehr hoch, es können hohe Festigkeitswerte erzielt werden und gleichzeitig hohe Dehnungswerte, die die Flexibilität des Materials garantieren.
- die so hergestellten Formkörper weisen eine sehr hohe Oberflächenhärte auf (Shore D), dadurch wird die Abriebfestigkeit entscheidend verbessert, dies resultiert auch in einer verbesserten optischen Qualität der Oberfläche derartiger Formkörper. Dadurch werden auch die Entformungseigenschaften verbessert, so daß die Zykluszeiten im Molding - Verfahren herabgesetzt werden.
- Die Formkörper weisen eine gute chemische Beständigkeit z.B. bei Kontakt mit Benzin und Motorenöl auf, dies macht ihren Einsatz speziell für den Automobilbereich möglich.
- Als Vergußmassen weisen sie eine ausgezeichnete PVC - Haftung auf, dies zeigt sich an sehr hohen Winkelschälfestigkeitswerten. Bei Verklebungen mit Kabelisolationsmaterial bestehend aus (weichmacherhaltigem) Weich - PVC erzielt man Materialbruch im PVC, dies gewährleistet hervorragende Dichtigkeitsergebnisse.
- Die Wärmestandfestigkeit gegenüber herkömmlichen Schmelzklebstoffen ist ebenfalls erheblich verbessert, auch dies ermöglicht deren Einsatz im Fahrzeugbau.

Bisher wurden solche vorteilhaften Eigenschaften nur mit alternativen Systemen zum Molding - Verfahren auf der Basis von 2-komponentigen Vergußsystemen, wie Epoxiden und Polyurethanen erreicht. Diese 2-komponentigen Vergußsysteme haben bekanntlich eine Reihe von Nachteilen, sie benötigen lange Aushärtungszeiten und eine mechanische Fixierung der eingegossenen Komponenten. Da dies in der Regel manuell geschieht, ist dieses Verfahren aufwendig. Außerdem enthalten 2-komponentige Vergußsysteme häufig gefährliche Arbeitsstoffe, die aufwendigen Schutz zur Arbeitshygiene erfordern.

Nachfolgend soll die Erfindung an Hand einiger Prinzipversuche dargestellt werden, wobei die Auswahl der Beispiele keine Beschränkung des Umfanges des Erfindungsgegenstandes darstellen soll, sie zeigen nur in modellhafterweise die Wirkungsweise der erfindungsgemäß zu verwendenden Schmelzklebstoffe.

### Beispiele:

### Beispiel 1:

Aus 100 mol% Dodecandisäure, 50 mol% Piperazin, 20 mol% Jeffamine D 400 und 30 mol % Diaminohexan wurde in an sich bekannter Weise durch Kondensationsreaktion unter Entfernung des Reaktionswassers ein Polyamid hergestellt. Dieses Polyamid hatte die folgenden Kennzahlen: Säurezahl: 15 mg KOH/g, Schmelzviskosität:17 200 mPa.s bei 200 °C, Erweichungspunkt: 160 °C.

### Beispiel 2:

In gleicher Weise wurden aus 100 mol % Sebacinsäure, 48 % mol Piperazin, 33 mol% Jeffamine D 400 und 19 mol % Ethylendiamin, ein Polyamid hergestellt. Seine Kennzahlen waren: Säurezahl:8,2 mg KOH/g, Schmelzviskosität:.17 000 m Pa.s bei 200 °C, Erweichungspunkt: 175 °C.

Die Polyamide gemäß Beispiel 1 und 2 wurden auf ihre wesentlichen Eigenschaften getestet. Hierzu wurden in der Tabelle 1 Zugfestigkeit, Reißdehnung, Shorehärte und Medienbeständigkeit der Polyamide gemäß Beispiel 1 und 2 den Polyamiden des Standes der Technik gegenüber gestellt. Die Polyamide "Macromelt OM 633" bzw. "Macromelt 6208" sind Polyamide auf der Basis von Dimerfettsäuren der Firma Henkel KGaA, die für viele Einsatzzwecke bisher erfolgreich für das "Macromelt Moulding" - Verfahren eingesetzt wurden. Aus dem Vergleich der erfindungsgemäßen Beispiele mit den Beispielen des Standes der Technik wird deutlich, daß die erfindungsgemäß zu verwendenden Polyamide wesentlich höhere Zugfestigkeiten haben und wesentlich höhere Shore-D-Härten aufweisen, trotzdem weisen Sie eine sehr hohe Reißdehnung auf. Zugfestigkeit und Dehnung wurden nach DIN 53455 gemessen, die Shore-D-Härte wurde nach DIN 53505 gemessen. Die Medien - Beständigkeit gegen Benzin und Motorenöl wurde in Anlehnung an die DIN 53495 gemessen, wobei die Prozentangaben die Gewichtszunahme des Formkörpers angeben. Eine geringe Gewichtszunahme zeigt, daß das Medium nur geringfügig durch den Formkörper aufgenommen wurde und ihn daher nur geringfügig erweichen konnte. Die PVC Haftung wurde als Winkelschälfestigkeit in Anlehnung an die DIN 53282 gemessen, es wurde bei den erfindungsgemäßen Versuchen Materialbruch im PVC erzielt, während bei den Polyamiden des Standes der Technik zwar relativ hohe Schälwerte erzielt wurden, es erfolgte jedoch eine adhesive Ablösung. Der Materialbruch bei den erfindungsgemäßen Beispielen zeigt, daß derartige Verbunde eine ausgezeichnete Dichtigkeit aufweisen werden.

In der Tabelle 2 sind weitere erfindungsgemäße Polyamid-Schmelzklebstoffe zusammengestellt. Hieraus wird ersichtlich, daß die Zugscherfestigkeit (ZSF in MPa) auf PVC in jedem Falle in einem Materialbruch (MB) resultiert. Dies ist wiederum ein Anzeichen für sehr gute Haftfestigkeit der erfindungsgemäß einzusetzenden Schmelzklebstoffe für Verbunde mit PVC - Materialien, wie sie in der Elektrik- und Elektronikindustrie vielfach eingesetzt werden. Weiterhin ist der Tabelle zu entnehmen, daß Reißdehnung (RD) und Elastizitätsmodul (E 100 bei 100 % Dehnung) durch die Wahl der Bausteine des Polyamides in weiten Grenzen beeinflusst werden können RD und E₁₀₀ wurden in Anlehnung and die DIN 53504 bestimmt. Die Schmelzviskosität wurde bei 200°C gemäß ASTM D 3236 gemessen [Pa.s].

**Tabelle 1**

| | **Beispiel 1** | **Macromelt OM 633 Vergleich 1** | **Beispiel 2** | **Macromelt 6208 Vergleich 2** |
|---|---|---|---|---|
| Zugfestigkeit | 15 MPa | 5.2 MPa | 25 MPa | 3.6 MPa |
| | | | | |
| Reissdehnung | 330 % | 400 % | 640 % | 650 % |
| | | | | |
| Shore D Härte | 57 | 30 | 40 | 20 |
| | | | | |
| Bestaendigkeit* Benzin | | | | |
| 1 h | 0.02% | 1.0% | 0.05% | 1.0% |
| 24 h | 0.1 % | 5.2 % | 0.3 % | 6.5 % |
| | | | | |
| Oel | | | | |
| 1 h | 0.1 % | 0.3 % | 0.1 % | 0.4 % |
| | | | | |
| PVC-Haftung | MB PVC | 9.0 N/mm | MB PVC | 7.5 N/mm |

**Tabelle 2**

| **Beispiel** | **Komponenten in mol%** | | **ZSF auf PVC** | **Schmelzviskosität** | **RD [%]** | **E₁₀₀ [MPa]** |
|---|---|---|---|---|---|---|
| 3 | Dodecandisäure | 101,52 | 5,81 MB | 20 | 255,4 | 13,43 |
| | Piperazin | 49,24 | | | | |
| | Jeffamin D230 | 19,70 | | | | |
| | Diaminohexan | 29,54 | | | | |
| 4 | Dodecandisäure | 101,52 | 3,43 MB | 20,1 | 123,5 | 23,8 |
| | Piperazin | 54,18 | | | | |
| | Jeffamin D230 | 14,78 | | | | |
| | Diaminohexan | 29,54 | | | | |
| 5 | Dodecandisäure | 101,52 | 5,76 MB | 17,2 | 327,1 | 14,53 |
| | Piperazin | 54,26 | | | | |
| | Jeffamin D230 | 11,68 | | | | |
| | Diaminohexan | 32,54 | | | | |
| 6 | Dodecandisäure | 101,52 | 3,2 MB | 17,7 | 119,5 | 22,8 |
| | Piperazin | 49,24 | | | | |
| | Jeffamin D230 | 14,78 | | | | |
| | Diaminohexan | 34,48 | | | | |
| 7 | Dodecandisäure | 101,00 | 4,2 MB | 14,5 | 151 | 24,36 |
| | Piperazin | 49,48 | | | | |
| | Jeffamin D230 | 14,84 | | | | |
| | Diaminohexan | 34,66 | | | | |
| 8 | Dodecandisäure | 76,14 | 5,47 MB | 10,8 | 144,7 | 21,9 |
| | Azelainsäure | 25,38 | | | | |
| | Piperazin | 49,24 | | | | |
| | Jeffamin D230 | 14,78 | | | | |
| | Diaminohexan | 34,48 | | | | |
| 9 | Dodecandisäure | 101,00 | 5,14 MB | 66,3 | 235 | 23,7 |
| | Piperazin | 49,48 | | | | |
| | Jeffamin D230 | 14,84 | | | | |
| | Diaminohexan | 34,66 | | | | |
| 10 | Sebacinsäure | 101,42 | 9,7 MB | 16,9 | 136 | 26,83 |
| | Piperazin | 49,98 | | | | |
| | Jeffamin D230 | 14,70 | | | | |
| | Diaminohexan | 34,30 | | | | |

## Patentansprüche

1. Verwendung von Polyamiden auf der Basis von Reaktionsprodukten aus C₄ - C₁₈- Dicarbonsäuren und Diaminen als Formmasse zur Herstellung von Formteilen in geschlossenen Gießformen oder Hohlkörpern im Niederdruck-Spritzgussverfahren bei einem Injektionsdruck von 0,5 bis 100 bar, **dadurch gekennzeichnet, dass** die Polyamide keine Dimerfettsäure-Bausteine enthalten und einen Schmelzpunkt zwischen 70° bis 230° C aufweisen.

2. Verwendung nach Anspruch 1, **dadurch gekennzeichnet, dass** die Polyamide aus
• 80 bis 100 mol%, C₄ - C₁₈ - Dicarbonsäuren
• 10 bis 100 mol%, aliphatischen Diaminen
• 10 bis 80 mol%, cycloaliphatischen Diaminen
• 0 bis 80 mol%, Polyetherdiaminen
herstellbar sind.

3. Verwendung nach Anspruch 2, **dadurch gekennzeichnet, dass** die Polyamide aus
• 80 bis 100 mol%, C₄ - C₁₈ - Dicarbonsäuren
• 30 bis 80 mol%, aliphatischen Diaminen
• 45 bis 60 mol%, cycloaliphatischen Diaminen
• 0 bis 80 mol%, Polyetherdiaminen
herstellbar sind.

4. Verwendung nach Anspruch 1 und 2, **dadurch gekennzeichnet, dass** das / die Polyamid(e) eine Viskosität, gemessen nach ASTM D 3236 bei 200°C zwischen 100 und 50000 mPas, haben.

5. Verfahren zur Herstellung von Formteilen für die Elektro- oder ElektronikIndustrie, **dadurch gekennzeichnet, dass** eine Formmasse nach Anspruch 1 bis 4 bei Temperaturen von 70°C bis 230°C aufgeschmolzen, die Schmelze im Niederdruckverfahren mit Injektionsdrücken von 0,5 bis 100 bar in die geschlossene Gießformen oder Hohlkörper gespritzt wird und die abgekühlten Formteile nach kurzer Zeit aus den Gießformen entformt werden.

6. Verfahren nach Anspruch 5, **dadurch gekennzeichnet, dass** in die Gießform mindestens ein Einlegeteil eingelegt wird und danach die Formmasse eingespritzt wird (insert moulding).

7. Verwendung nach mindestens einem der Ansprüche 1 bis 4 zum klebenden Dichten bzw. Füllen von elektrischen oder elektronischen Vorrichtungen.

8. Verwendung nach Anspruch 7 zum Dichten und Füllen von Steckern, Kabeln, Schaltern, Sensoren, Transpondern, Modulen, Leiterplatten oder Smart Cards.

## Claims

1. Use of polyamides based on reaction products of C₄-C₁₈ dicarboxylic acids and diamines as a moulding composition for the production of mouldings in closed moulds or cavities in the low pressure injection moulding process at an injection pressure of 0.5 to 100 bar, **characterized in that** the polyamides contain no dimer fatty acid units and have a melting point between 70° to 230°C.

2. Use according to Claim 1, **characterized in that** the polyamides are producible from
• 80 to 100 mol % C₄-C₁₈ dicarboxylic acids
• 10 to 100 mol % aliphatic diamines
• 10 to 80 mol % cycloaliphatic diamines
• 0 to 80 mol % polyether diamines.

3. Use according to Claim 2, **characterized in that** the polyamides are producible from
• 80 to 100 mol % C₄-C₁₈ dicarboxylic acids
• 30 to 80 mol % aliphatic diamines
• 45 to 60 mol % cycloaliphatic diamines
• 0 to 80 mol % polyether diamines.

4. Use according to Claim 1 and 2, **characterized in that** the polyamide(s) has/have a viscosity, measured in accordance with ASTM D 3236, at 200°C of between 100 and 50 000 mpa·s.

5. Process for the production of mouldings for the electrical or electronics industry, **characterized in that** a moulding composition according to Claim 1 to 4 is melted at temperatures of 70°C to 230°C, the melt is injected in the low pressure process at injection pressures of 0.5 to 100 bar into the closed moulds or cavities and the cooled mouldings are removed from the moulds after a short time.

6. Process according to Claim 5, **characterized in that** at least one insert is inserted into the mould and thereafter the moulding composition is injected (insert moulding).

7. Use according to at least one of Claims 1 to 4 for the adhesive sealing or filling of electrical or electronic devices.

8. Use according to Claim 7 for the sealing and filling of plugs, cables, switches, sensors, transponders, modules, printed circuit boards or smart cards.

## Revendications

1. Utilisation de polyamides à base de produits de réaction d'acides dicarboxyliques en C₄ à C₁₈ et de diamines comme masse de moulage pour la production de pièces moulées dans des moules de coulée fermés ou des corps creux dans le procédé de moulage par injection à basse pression à une pression d'injection de 0,5 à 100 bars, **caractérisée en ce que** les polyamides ne contiennent pas d'éléments d'acides gras dimères et présentent un point de fusion entre 70°C et 230°C.

2. Utilisation selon la revendication 1, **caractérisée en ce que** les polyamides peuvent être préparés à partir de
• 80 à 100% en mole d'acides dicarboxyliques en C₄ à C₁₈
• 10 à 100% en mole de diamines aliphatiques
• 10 à 80% en mole de diamines cycloaliphatiques
• 0 à 80% en mole de polyétherdiamines.

3. Utilisation selon la revendication 2, **caractérisée en ce que** les polyamides peuvent être préparés à partir de
• 80 à 100% en mole d'acides dicarboxyliques en C₄ à C₁₈
• 30 à 80% en mole de diamines aliphatiques
• 45 à 60% en mole de diamines cycloaliphatiques
• 0 à 80% en mole de polyétherdiamines.

4. Utilisation selon la revendication 1 et 2, **caractérisée en ce que** le ou les polyamides présentent une viscosité, mesurée selon la norme ASTM D 3236 à 200°C entre 100 et 50 000 mPa.s.

5. Procédé pour la production de pièces moulées pour l'industrie électrique ou électronique, **caractérisé en ce qu'**on fond une masse de moulage selon la revendication 1 à 4 à des températures de 70°C à 230°C, on injecte la masse fondue dans un procédé basse pression avec des pressions d'injection de 0,5 à 100 bars dans les moules de coulée fermés ou des corps creux et les pièces moulées refroidies sont démoulées après un court laps de temps des moules de coulée.

6. Procédé selon la revendication 5, **caractérisé en ce que** ce qu'on place dans le moule de coulée au moins un insert, puis la masse de moulage est injectée (insert moulding).

7. Procédé selon au moins l'une quelconque des revendications 1 à 4 pour la fermeture adhésive ou le remplissage de dispositifs électriques ou électroniques.

8. Utilisation selon la revendication 7 pour la fermeture et le remplissage de prises, câbles, interrupteurs, sondes, transpondeurs, modules, circuits imprimés ou cartes à puces.
